# EUROPÄISCHE PATENTANMELDUNG

(11) **EP 0 831 650 A2**
(43) Veröffentlichungstag der Anmeldung: **25.03.1998**
(21) Anmeldenummer: 97109716.7
(22) Anmeldetag: 14.06.1997
(51) Int. Cl.: H04N 7/00

(54) **Verfahren und Vorrichtung zur Kodierung von digitalen Bildsignalen mit Szenenwechseldetektion**

(30) Priorität: 28.06.1996 DE 19626108
(71) Anmelder: DEUTSCHE THOMSON-BRANDT GMBH, 78048 Villingen-Schwenningen (DE)
(72) Erfinder: Herpel, Carsten, 30171 Hannover (DE); Riemann, Uwe, 38124 Braunschweig (DE)
(74) Vertreter: Hartnack, Wolfgang, Dipl.-Ing.

(57) **Zusammenfassung**

Für den zukünftigen digitalen Fernsehrundfunk und die damit verbundenen interaktiven Kommunikationsdienste müssen in großen Umfang Bilddaten über geeignete Codiereinrichtungen in ihrer Datenmenge reduziert werden. Ein hierfür vorgesehenes Codierverfahren ist der MPEG2-Standard. Wenn bei der Codierung innerhalb von aufeinander folgenden Bild-Gruppen ein Wechsel in der Bildszene auftritt, liegt für die aktuelle Bildgruppe keine vernünftige Basis für die Prädiktion der B- und P-Frames vor. Dadurch wird das Rekonstruktionsergebnis im Decoder unbefriedigend bleiben. Gemäß der Erfindung werden solche Szenenwechsel detektiert und das erste Bild der neuen Szene wird intraframe-codiert.

## Beschreibung

Die Erfindung betrifft ein Verfahren und eine Vorrichtung zur Codierung von digitalen Bildsignalen.

### Stand der Technik

Für den zukünftigen digitalen Fernsehrundfunk (DVB = Digital Video Broadcasting) und die damit verbundenen interaktiven Kommunikationsdienste müssen in großen Umfang Bilddaten über geeignete Codiereinrichtungen in ihrer Datenmenge reduziert werden. Dieser Schritt ist erforderlich, um mehr Programme über vorhandene Kanäle übertragen zu können oder um Bewegtbildsequenzen in bereits existierenden schmalbandigen Übertragungsstrecken zu übermitteln. Ein hierfür vorgesehenes Codierverfahren ist der MPEG2-Standard (ISO/IEC 13818).

### Erfindung

Um einen möglichst hohen Kompressionfaktor bei der Codierung zu erzielen, werden bei MPEG die Eingangsbilder in GOP-Gruppen (Group of Pictures) zusammengefaßt. Innerhalb einer solchen Bild-Gruppe werden die einzelnen Bilder unterschiedlich codiert. Eine Gruppe besteht nach MPEG immer aus einem intraframe-codiertem Vollbild (I Frame) sowie normalerweise aus mehrerem P-Frames (prädiziertes Vollbild) und/oder B-Frames (bidirektional berechnete Vollbilder), wobei hier wie auch im Folgenden gilt, daß statt 'Vollbild (Frame)' auch 'Halbbild (Field)' eingesetzt werden kann.
Die Datenrate, die für die Übertragung eines Vollbildes aus dieser Gruppe erforderlich ist, hängt neben dem aktuellen Bildinhalt auch vom betreffenden Frametyp (I, P oder B) ab. Die größte relative Datenmenge innerhalb einer Bildgruppe entfällt auf die I-Frames. Sie enthalten alle Daten, die für eine vollständige Rekonstruktion im Decoder benötigt werden. Demgegenüber werden P-Frames aus I-Frames oder einem vorhergehen P-Frame prädiziert, d.h. für die Rekonstruktion der P-Frames auf der Empfangsseite ist das Vorhandensein eines vollständigen I-Frames in der betreffenden Bildgruppe erforderlich. Dafür braucht dann nur die Differenz zum vorhergehenden I- oder P-Frame codiert zu werden. B-Frames hingegen werden im wesentlichen aus bereits rekonstruierten I- bzw. P-Frames berechnet (interpoliert). Entsprechend gering ist die Datenmenge, die für ein B-Frame übertragen werden muß. Bestimmte Bild-Typen können auch einzelne Macro-Blöcke anderer Bild-Typen enthalten, z.B. können in P- und-B-Bildern I-Macroblöcke an sonst nur mit ungenügender Effizienz codierbaren Bildausschnitten auftreten.
Die zuvor beschriebene Klassifizierung der Vollbilder in verschiedene Frametypen erlaubt zwar eine sehr hohe Codiereffizienz, macht aber die verschieden Frametypen unterschiedlich empfindlich gegenüber Übertragungsfehlern. So bleiben Übertragungs- oder Rekonstruktionsfehler innerhalb von B-Frames auf das entsprechende B-Frame beschränkt, während sich fehlerhafte I- und P-Frames auf die gesamte Bildgruppe (GOP) auswirken können. Bei der häufigsten MPEG2-Parameterwahl von 12 Vollbildern pro GOP kann die Zeitdauer hierfür bis zu circa einer halben Sekunde betragen (bei 50Hz Bildwiederholfrequenz, bei 60 oder 59.94Hz Bildwiederholfrequenz entsprechend kürzer) und ist damit für einen Betrachter sehr störend.

Ein ähnlicher Effekt hinsichtlich der Fehlerverschleifung kann auch dann auftreten, wenn bei der Codierung eines Spielfilms innerhalb einer Bildgruppe ein Wechsel in der Bildszene auftritt. In diesem Fall liegt für die aktuelle Bildgruppe keine vernünftige Basis für die Prädiktion der B- und P-Frames vor, sondern das erste Bild der neuen Szene wird aufgrund der internen Codersteuerung zu einem großen Teil mit Intraframe-Macroblöcken codiert. Da die zugewiesene Datenmenge für ein P-Frame nicht groß genug ist, um große Anteile des Bildes mit guter Qualität intraframe zu codieren, wird das Rekonstruktionsergebnis im Decoder unbefriedigend bleiben. Erst in der nachfolgenden Bildgruppe liegen wieder stabile Verhältnisse für den Codierprozess vor, die eine einwandfreie Rekonstruktion erlauben.
Bisherige Codierprozesse zur Datenreduktion gehen davon aus, daß die Datenmenge (Bildfolgen), die beispielsweise von einem Filmabtaster stammt, einem MPEG-Coder zugeführt wird, der fortlaufend einen datenreduzierten Bitstrom erzeugt. Bei diesem Konzept fallen Szenenschnitte des Originalfilms völlig willkürlich mit einem durch den Coder bestimmten Frametyp zusammen, was zu der zuvor beschrieben Fehlerverschleifung innerhalb einer Bildgruppe führen kann.

Der Erfindung liegt die Aufgabe zugrunde, ein Verfahren anzugeben, bei dem der Codierprozess mit einem vorhandenen Szenenwechsel synchronisiert wird. Diese Aufgabe wird durch das in Anspruch 1 angegebene Verfahren gelöst.

Der Erfindung liegt die weitere Aufgabe zugrunde, eine Vorrichtung zur Anwendung des erfindungsgemäßen Verfahrens anzugeben. Diese Aufgabe wird durch die in Anspruch 6 angegebene Vorrichtung gelöst.

Zu diesem Zweck wird zwischen Bildgeber (Filmabtaster, Kamera, Aufzeichnungsgerät oder eine andere Signalquelle) und Coder ein Szenendetektor geschaltet. Dieser generiert ein geeignetes Steuersignal und veranlaßt den Codierprozess, bei einem Szenenwechsel mit einer neuen Bildgruppe, d.h. mit einem I-codierten Bild zu beginnen. Vorteilhaft kann dadurch verhindert werden, daß ein Szenenwechsel z.B. in die Mitte einer Bildgruppe fällt und somit eine Rekonstruktion mit verschlechterter Qualität beim Decoder hervorgerufen wird. Vorteilhaft erfordert diese Maßnahme keinen Zusatzaufwand im Decoder und führt somit nicht zu einer Erhöhung der Komplexität und damit der Kosten im Endgerät, d.h. einem Decoder in einer Set-Top-Box oder in einem Fernsehgerät / Videorecorder / DVD-Spieler (Digital Video Disc).

Im Prinzip besteht das erfindungsgemäße Verfahren darin, daß zur Codierung von digitalen Bildsignalen, bei dem jeweils mit einer festgelegten Sequenz ein intraframe-codiertes Bild und mindestens ein anderer Bild-Codiertyp für ein weiteres Bild oder weitere Bilder in einer Gruppe von aufeinanderfolgenden Bildern verwendet werden, in einem Detektor sich von einem Bild zu einem anderen Bild stark ändernde Bildpunkt-Werte oder sich stark ändernder Bildinhalt ermittelt werden und die weitere Codierung so gesteuert wird, daß bei einem Bild mit sich stark ändernten Bildpunkt-Werten oder sich stark änderndem Bildinhalt unabhängig von der Lage dieses Bildes innerhalb der Gruppe eine Intraframe-Codierung durchgeführt wird.

Vorteilhafte Weiterbildungen des erfindungsgemäßen Verfahrens ergeben sich aus den zugehörigen abhängigen Ansprüchen.

Im Prinzip ist die erfindungsgemäße Vorrichtung zur Codierung von digitalen Bildsignalen, bei der jeweils mit einer festgelegten Sequenz ein intraframe-codiertes Bild (I) und mindestens ein anderer Bild-Codiertyp (P, B) für ein weiteres Bild oder weitere Bilder in einer Gruppe von aufeinanderfolgenden Bildern verwendet werden, versehen mit:
- einem Detektor, der sich von einem Bild zu einem anderen Bild stark ändernde Bildpunkt-Werte oder sich stark ändernden Bildinhalt ermittelt;
- einem Coder, der von dem Detektor so gesteuert wird, daß bei einem Bild mit sich stark ändernden Bildpunkt-Werten oder sich stark änderndem Bildinhalt unabhängig von der Lage dieses Bildes innerhalb der Gruppe eine Intraframe-Codierung durchgeführt wird.

Vorteilhafte Weiterbildungen der erfindungsgemäßen Vorrichtung ergeben sich aus dem zugehörigen abhängigen Anspruch.

### Zeichnung

Anhand der Zeichnung ist ein Ausführungs-Beispiel der Erfindung beschrieben. Diese zeigt in:

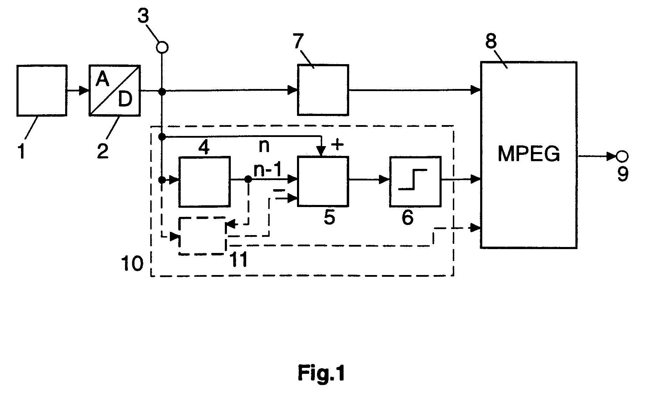

- Fig. 1: Beispiel für einen szenengesteuerten MPEG-Coder.

### Ausführungs-Beispiele

Das Bildsignal wird einem Bildgeber 1 entnommen, der ein Filmabtaster, eine Fernsehkamera oder eine beliebige analoge Bildquelle (z. B. Bandaufzeichnungsgerät) sein kann. Dieses Signal wird zunächst einem Analog/Digital-Umsetzer 2 zugeführt, damit dem Coder digitale Eingangsdaten zur Verfügung gestellt werden können. Ist als Signalgeber bereits eine digitale Signalquelle verfügbar, kann diese über Eingang 3 an die Schaltungsanordnung angeschlossen werden. Das Signal an Eingang 3 wird nun einem Szenendetektor 10 zugeführt, der z.B. aus einem Vollbildspeicher 4, einer Subtraktions-Stufe 5 und einem Schwellwert-Entscheider 6 besteht. Am Eingang des Vollbildspeichers 4 steht das aktuelle Vollbild n der Signalquelle und am Ausgang das um eine Bildperiode verzögerte vorhergehende Vollbild n-1 zur Verfügung. Über die Subtraktions-Stufe 5 wird z.B. die Summe der Absolutwert-Differenzen der Bildpunkte beider Vollbilder berechnet. Diese Summen-Wert wird daraufhin dem Schwellwert-Entscheider 6 zugeführt. In Abhängigkeit von diesem Summen-Wert erzeugt der Schwellwert-Entscheider ein Steuersignal für den MPEG-Coder 8. Die Kennlinie des Schwellwert-Entscheiders ist dabei so bemessen, daß Unterschiede in der gleichen Bildszene, die z.B. hervorgerufen werden durch bewegte Objekte oder durch langsame Kameraschwenks, kein Steuersignal bzw. ein erstes Steuersignal auslösen (bei einem relativ kleinen Summen-Wert), daß aber ein Szenenwechsel, der durch eine völlig andere Bildinformation charakterisiert ist, zu einem eindeutigen Steuersignal bzw. einem zweiten Steuersignal führt (bei einem relativ großen Summen-Wert).

Damit das Steuersignal zeitgleich mit dem Szenenwechsel am Coder 8 anliegt, muß das Vollbild der Signalquelle in dem Zwischenspeicher 7 entsprechend um eine Bildperiode verzögert werden. Der Coder 8 erkennt nun durch das Steuersignal, ob das an seinem Eingang anliegende Vollbild zu einer neuen Bildszene gehört und veranlaßt, falls dies der Fall ist, den Codieralgorithmus mit einer neuen Bildgruppe und daher mit einem I-codierten Bild zu beginnen. Das datenreduzierte Ausgangssignal steht an Ausgang 9 zur Verfügung.

Um z.B. stärkere Kameraschwenks als solche zu erkennen, kann der Szenendetektor 10 auch intern eine globale Bildsignal-Prädiktion in einem Global-Prädiktor 11 durchführen. Ein solcher Global-Prädiktor ist z.B. in EP-A-0 414 113 beschrieben. Dazu wird das Ein- und das Ausgangssignal von Speicher 4 dem Prädiktor 11 zugeführt. Falls dieser Prädiktor eine globale Bewegung im Bild erkennt, werden die Subtraktions-Stufe 5, der Schwellwert-Entscheider 6 und/oder der Coder 8 so gesteuert, daß der Coder 8 nicht von der normalen I-Bild-Sequenz abweicht. Die Global-Bewegungsparameter können von Prädiktor 11 zum Coder 8 weitergeleitet werden. Der Vorteil dabei ist, daß Bilder mit globaler Bewegung mit guter Effizienz als P- oder B-Bilder codiert werden können und daher die Zahl der I-codierten Bilder und damit die Datenrate nicht unnötig erhöht werden muß, d.h. daß ein detektierbarer (globaler) Kameraschwenk nicht als Szenenwechsel interpretiert wird. Vorteilhaft kann bei der "normalen" Prädiktion im Coder das Ergebnis dieser globalen Prädiktion miteinbezogen werden. Dadurch kann die Prädiktion im Coder 8 vereinfacht bzw. verbessert werden.

In weiteren Ausführungsbeispielen der Erfindung kann die Speicherkapazität für den Szenendetektor reduziert werden. Ein Szenenwechsel läßt sich auch auf der Basis von Halbbildern erkennen. Die Speicher 4 und 7 sind dann Halbbild-Speicher und in Subtrahierer 5 werden dann die Bildpunkt-Werte zweier benachbarter Halbbilder entsprechend miteinander verarbeitet. Die beiden Halbbilder können auch aus benachbarten Vollbildern stammen.

Eine andere oder eine weitere Verminderung der Speicher-Kapazität ist mit Hilfe einer Bilddatenreduktion vor dem Eingang von Speicher 4 und eventuell auch Zwischen-Speicher 7 möglich, die durch eine horizontale und/oder vertikale Tiefpass-Filterung der Bilddaten in Verbindung mit einer Unterabtastung in der entsprechenden Richtung durchgeführt werden kann.

Bei einem Szenenwechsel kann entweder die I-Codierung zusätzlich in die vorhandene Sequenz eingeschoben werden. Es kann aber auch ab dem Szenenwechsel wieder die normale Sequenz fortgesetzt werden, also z.B. alle 12 Bilder ein I-Bild, wobei das Bild mit dem Szenenwechsel das erste dieser I-Bilder ist.

Die Erfindung ist nicht nur auf den Studiosektor beschränkt, sondern kann auch auf Datenträgern, insbesondere optischen Platten, die erfindingsgemäß codierte Videodaten enthalten, im Konsumentenbereich eingesetzt werden. Beispielsweise läßt sich mit Hilfe der Erfindung die Qualität bei der Aufzeichnung von Videosignalen auf einem digitalen Heim-Videorekorder oder DVD-Recorder in der dargestellten Weise verbessern. In diesem Fall ist der Szenendetektor nicht als Teil des Bildgebers anzusehen, sondern ist als zusätzliches Schaltungselement im Aufzeichnungsgerät implementiert.

Im Fall von empfangenen, mit fester GOP-Länge codierten Videosignalen können diese zunächst decodiert und dann mit variabler GOP-Länge für die Aufzeichnung encodiert werden. Bei der Aufzeichnung von digitalen Videosignalen, die gemäß der Erfindung codiert, mit einer entsprechenden, variablen GOP-Längen-Information versehen und öffentlich übertragen werden, oder im Fall der Wiedergabe nur von vorbespielten Datenträgern, kann dann der Szenendetektor im Aufzeichnungsgerät entfallen bzw. sein Ausgangssignal nicht für die Aufzeichnung ausgewertet werden.

Die Erfindung ist nicht auf den MPEG2- oder MPEG1-Codierstandard beschränkt. Die Erfindung läßt sich bei allen Codierprozessen anwenden, die eine Segmentierung der Bilddaten in Bildgruppen vornehmen, z.B. MPEG4.

## Patentansprüche

1. Verfahren zur Codierung (8) von digitalen Bildsignalen, bei dem jeweils mit einer festgelegten Sequenz ein intraframe-codiertes Bild (I) und mindestens ein anderer Bild-Codiertyp (P, B) für ein weiteres Bild oder weitere Bilder in einer Gruppe (GOP) von aufeianderfolgenden Bildern verwendet werden, dadurch **gekennzeichnet,** daß in einem Detektor (10) sich von einem Bild zu einem anderen Bild stark ändernde Bildpunkt-Werte oder sich stark ändernder Bildinhalt ermittelt werden und die weitere Codierung (8) so gesteuert wird, daß bei einem Bild mit sich stark ändernden Bildpunkt-Werten oder sich stark änderndem Bildinhalt unabhängig von der Lage dieses Bildes innerhalb der Gruppe (GOP) eine Intraframe-Codierung durchgeführt wird.

2. Verfahren nach Anspruch 1, wobei in dem Detektor (10) die Summe der Absolutwert-Differenzen der Bildpunkte zweier benachbarter Vollbilder (n, n-1) oder Halbbilder gebildet (5) und mit einem Schwellwert verglichen (6) wird, um ein Steuersignal für die nachfolgende Codierung (8) zu erzeugen.

3. Verfahren nach Anspruch 1 oder 2, wobei die Bilddaten vor der Bildung der Absolutwert-Differenzen horizontal und/oder vertikal tiefpass-gefiltert und in entsprechender Richtung unterabgetastet werden.

4. Verfahren nach einem oder mehreren der Ansprüche 1 bis 3, wobei in dem Detektor (10) mittels einer Prädiktion globale Bewegungsparameter gesucht werden und falls solche vorliegen, keine zusätzliche Intraframe-Codierung erfolgt.

5. Verfahren nach Anspruch 4, wobei bei der weiteren Codierung (8) die globalen Bewegungsparameter verwendet oder berücksichtigt werden.

6. Vorrichtung zur Codierung (8) von digitalen Bildsignalen, bei der jeweils mit einer festgelegten Sequenz ein intraframe-codiertes Bild (I) und mindestens ein anderer Bild-Codiertyp (P, B) für ein weiteres Bild oder weitere Bilder in einer Gruppe (GOP) von aufeianderfolgenden Bildern verwendet werden, **gekennzeichnet** durch:
- einen Detektor (10), der sich von einem Bild zu einem anderen Bild stark ändernde Bildpunkt-Werte oder sich stark ändernden Bildinhalt ermittelt;
- einen Coder (8), der von dem Detektor so gesteuert wird, daß bei einem Bild mit sich stark ändernden Bildpunkt-Werten oder sich stark änderndem Bildinhalt unabhängig von der Lage dieses Bildes innerhalb der Gruppe (GOP) eine Intraframe-Codierung durchgeführt wird.

7. Vorrichtung nach Anspruch 6, wobei der Detektor (10) einen Prädiktor (11) enthält, der globale Bewegungsparameter ermittelt und, falls solche vorliegen, den Coder so steuert, daß darin keine zusätzliche Intraframe-Codierung erfolgt.

8. Datenträger, insbesondere optische Platte, der Videodaten enthält, die mit einem Verfahren nach Anspruch 1 codiert sind.
